(19) **Europäisches Patentamt / European Patent Office / Office européen des brevets**

(11) **EP 3 502 577 B1**

(12) **FASCICULE DE BREVET EUROPEEN**

(45) Date de publication et mention de la délivrance du brevet:
**19.06.2024 Bulletin 2024/25**

(21) Numéro de dépôt: **18214242.2**

(22) Date de dépôt: **19.12.2018**

(51) Classification Internationale des Brevets (IPC):
**F24F 3/14** (2006.01)    **F24F 3/153** (2006.01)

(52) Classification Coopérative des Brevets (CPC):
**F24F 3/1405; F24F 3/153;** F24F 2203/026;
Y02P 80/10

(54) **CENTRALE DE TRAITEMENT DE L'AIR COMPRENANT UN DISPOSITIF À ABSORPTION ET PROCÉDÉ ASSOCIÉ**

LUFTAUFBEREITUNGSSYSTEM, DAS EINE VORRICHTUNG ZUR ABSORPTION UMFASST, UND ENTSPRECHENDES VERFAHREN

AIR TREATMENT UNIT COMPRISING AN ABSORBING DEVICE AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1762719**

(43) Date de publication de la demande:
**26.06.2019 Bulletin 2019/26**

(73) Titulaires:
• **Commissariat à l'Energie Atomique et aux Energies Alternatives**
**75015 Paris (FR)**
• **Energie Transfert Thermique**
**29830 Ploudalmezeau (FR)**

(72) Inventeurs:
• **BOUDEHENN, François**
**07190 SAINT-SAUVEUR DE MONTAGUT (FR)**
• **LE BORGNE, Mikael**
**29290 SAINT RENAN (FR)**
• **DESCHAMPS, Antoine**
**29410 SAINT THEGONNEC (FR)**

(74) Mandataire: **Hautier IP**
**20, rue de la Liberté**
**06000 Nice (FR)**

(56) Documents cités:
**AU-B2- 2006 238 321    FR-A1- 2 341 342**
**US-A- 2 155 484**

**Description**

DOMAINE TECHNIQUE DE L'INVENTION

L'invention concerne le domaine du traitement de l'air des bâtiments résidentiels, tertiaires et industriels.

L'invention concerne une centrale de traitement de l'air comprenant un dispositif à absorption.

Elle trouve pour application particulièrement avantageuse le traitement de l'air, notamment pour la déshumidification de l'air. L'invention s'appliquera préférentiellement à l'air de piscines couvertes ou par extensions pour le conditionnement d'air pour des bâtiments en milieu tropical (tels que des bâtiments, plateforme offshore, navire de croisière), pour des usines utilisant de l'eau ou de la vapeur dans leurs procédés (industrie papetière, plâtrerie ...) ou bâtiments à charge latente importante (salle de spectacle, grande distribution...).

ÉTAT DE LA TECHNIQUE

Le traitement de l'air des bâtiments est généralement assuré par une centrale à modulation d'air neuf. L'air intérieur est partiellement remplacé par l'air extérieur plus sec qui doit alors être réchauffé à la température de confort du bâtiment. Le réchauffage de l'air peut être réalisé soit via une chaudière à gaz soit via une pompe à chaleur classique. Ces systèmes sont simples et présentent un coût d'investissement relativement faible. Cependant, la déshumidification nécessite des taux de renouvellement d'air importants dépendants des conditions climatiques extérieures et entrainants des coûts énergétiques de fonctionnement très élevés.

Les centrales de traitement de l'air les plus performantes et les plus économes sont aujourd'hui basées sur des systèmes thermodynamiques double flux où la déshumidification est assurée par l'action du cycle frigorifique d'une pompe à chaleur à compresseur de vapeur électrique. L'air passe successivement sur l'évaporateur pour être asséché par refroidissement puis sur le condenseur positionné en ligne pour réchauffer l'air déshumidifié. Les calories prélevées sur l'évaporateur sont transmises au condenseur en ligne. L'appoint peut être réalisé par une batterie supplémentaire.

Un appoint thermique provenant généralement d'une chaudière à gaz reste cependant indispensable pour assurer la consigne en température de l'air. Ce type de système (appelé « Thermo-frigo-pompe à modulation d'air neuf ») permet des économies d'énergie d'environ 40 % par rapport à un système classique de type chaudière à modulation d'air neuf et d'environ 20% par rapport à un système thermodynamique à modulation d'air neuf qui correspond à la technologie optimisée actuelle.

On connait du document CN106091187 un dispositif de conditionnement d'air par couplage à un système à absorption de chaleur à basse température et à régénération de chaleur par condensation. Le dispositif comprend les différents éléments d'un système à absorption à savoir un générateur, un condenseur, un évaporateur et un absorbeur. Le système à absorption est couplé à différents modules intermédiaires en vue du traitement de l'air. Ainsi, l'évaporateur est couplé à un module de refroidissement de l'air par un circuit d'eau. L'air extérieur est d'abord asséché par un déshumidificateur d'air utilisant une solution de déshumidification puis l'air est refroidi par le module de refroidissement de l'air.

Le dispositif ne prévoit pas de mode de réalisation dans lequel l'air est asséché puis réchauffé. En outre, ce dispositif est particulièrement complexe en mettant en oeuvre quatre échangeurs intermédiaires et des modules de refroidissement de l'air, un déshumidificateur et un module de régénération d'une solution de déshumidification.

Il existe donc le besoin de proposer une solution compacte et simplifiée pour le traitement de l'air permettant sa déshumidification et son réchauffage.

Le document FR 2 341 342 A1 montre une centrale de traitement de l'air selon le préambule de la revendication 1.

RÉSUMÉ DE L'INVENTION

Pour atteindre cet objectif, selon un aspect de l'invention qui est aussi un mode de réalisation, la présente invention prévoit une centrale de traitement de l'air tel que décrit dans la revendication 1. En particulier, ladite centrale de traitement de l'air est destinée à assécher un flux d'air entrant dans la centrale, comprenant avantageusement un dispositif à absorption, comprenant un absorbeur, un générateur, un condenseur, un évaporateur et un circuit de circulation fluidique apte à recevoir une solution de travail comprenant un fluide frigorigène et un absorbant, le circuit fluidique reliant le générateur au condenseur, le condenseur à l'évaporateur, l'évaporateur à l'absorbeur et l'absorbeur au générateur et dans lequel

- le générateur est configuré pour vaporiser le fluide frigorigène de la solution de travail,
- le condenseur est configuré pour condenser le fluide frigorigène à l'état de vapeur issu du générateur,
- l'évaporateur est configuré pour vaporiser le fluide frigorigène issu du condenseur,
- l'absorbeur est configuré pour condenser le fluide frigorigène à l'état de vapeur issu de l'évaporateur pour permettre son absorption par la solution de travail,

la centrale étant caractérisée en ce que l'évaporateur comprend au moins une batterie froide humide destinée à assécher et refroidir un flux d'air entrant par échange direct avec le fluide frigorigène et que le condenseur comprend une batterie chaude destinée à réchauffer un flux d'air asséché et refroidi issu de l'évaporateur par échange direct avec le fluide frigorigène.

La centrale comprend un compartiment technique dans lequel est agencé le générateur, l'absorbeur et préférentiellement également une pompe à solution, un détendeur de solution, un économiseur et un détendeur réfrigérant.

Cette disposition présente l'avantage de placer dans un compartiment séparé le générateur et l'absorbeur et avantageusement les éléments moteurs du dispositif à absorption sans gêner le flux d'air à traiter.

Le générateur et l'absorbeur sont disposés l'un au-dessus de l'autre, le générateur étant préférentiellement disposé au-dessus de l'absorbeur.

◦ La centrale comprend un compartiment de circulation d'air configuré pour recevoir un flux d'air ascendant et dans lequel sont agencés l'évaporateur et le condenseur. , le condenseur étant agencé au-dessus de l'évaporateur.

Le condenseur est agencé à un même niveau de hauteur que le générateur. L'évaporateur est agencé à un même niveau de hauteur que l'absorbeur.

Ceci permet de placer dans le flux d'air circulant uniquement les éléments interagissant directement avec le flux d'air améliorant ainsi les échanges thermiques et la circulation du flux d'air.

En particulier, cette conception de la centrale selon l'invention permet de réduire voire annuler les problématiques de perte de pression liées notamment aux batteries utilisées comme condenseur et comme évaporateur.

Ceci est d'autant plus vrai, lors de l'utilisation du couple eau / bromure de lithium qui nécessite un fonctionnement à basse pression avec une différence de pression entre la haute pression et la basse pression faible notamment inférieure ou égale à 100mbars.

Le positionnement particulier des différents composants de la centrale contribue à assurer des connexions courtes et directes de sorte à limiter les longueurs et les coudes des liaisons associées au générateur et au condensateur c'est-à-dire les liaisons de la partie condensation, détente, évaporation de la partie motrice de la centrale.

L'invention présente l'avantage de permettre le traitement d'un flux d'air directement au niveau de l'évaporateur et du condenseur sans échangeur ou circuit intermédiaire.

La centrale selon l'invention utilise un dispositif à absorption fonctionnant par un apport thermique permettant d'obtenir des rendements élevés.

L'invention optimise le fonctionnement d'un cycle d'absorption d'un dispositif d'absorption en limitant notamment le nombre d'échangeurs c'est-à-dire limitant les pincements en température entre l'utilisation finale et la production.

L'échange direct dans l'évaporateur et le condenseur entre le fluide frigorigène et le flux d'air permet de s'affranchir des circuits intermédiaires et donc des pompes associées réduisant d'autant les consommations électriques.

Avantageusement, le générateur comprend une entrée de source chaude et une sortie de source chaude, la source chaude étant de l'eau.

Avantageusement, l'absorbeur comprend une entrée de source froide et une sortie de source froide, la source froide étant de l'eau, avantageusement de l'eau d'une piscine destinée à être chauffée.

La centrale selon l'invention présente une valorisation maximale de l'énergie issue de la source chaude par multi-valorisation des flux d'énergie :

- le froid produit à l'évaporateur est utilisé pour la déshumidification du flux d'air entrant;
- le chaud produit au condenseur est utilisé pour le réchauffage du flux d'air asséché et refroidi par l'évaporateur;
- le chaud produit à l'absorbeur est utilisé pour du préchauffage d'eau ;

Un autre aspect de la présente invention concerne un procédé de traitement de l'air par une centrale telle que décrite ci-dessus comprenant les étapes successives suivantes

a. de chauffage de la solution de travail dans le générateur de sorte à vaporiser le fluide frigorigène et à conserver l'absorbant à l'état liquide,
b. de condensation de la vapeur du fluide frigorigène issu du générateur dans le condenseur par transfert direct de l'énergie thermique de la vapeur du fluide frigorigène à un flux d'air asséché et refroidi issu de l'évaporateur de sorte à le réchauffer,
c. de vaporisation du fluide frigorigène issu du condenseur dans l'évaporateur par transfert direct de l'énergie thermique d'un flux d'air entrant de sorte à assécher et à refroidir ledit flux d'air,
d. d'absorption de la vapeur de fluide frigorigène issue de l'évaporateur dans l'absorbeur.

Le procédé selon l'invention permet, grâce à un couplage direct entre l'évaporateur, le condenseur et l'air à traiter, une grande efficacité et des bons rendements.

Un autre aspect de la présente invention concerne l'utilisation d'une centrale de traitement de l'air telle que décrite dans la revendication 9. En particulier, il concerne l'utilisation de la centrale de traitement de l'air ci-dessus pour assécher l'air intérieur d'une piscine couverte et avantageusement de chauffer l'eau.

Un autre aspect de l'invention concerne un bâtiment tel qu'une piscine couverte équipé d'une centrale telle que revendiquée dans la revendication 1.

BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La FIGURE 1 est une représentation schématique d'une centrale selon l'invention.
Les FIGURES 2A, 2B et 3 sont des représentations en 3 dimensions de l'architecture d'une centrale selon l'invention.

Les dessins sont donnés à titre d'exemple et ne sont pas limitatifs de l'invention. Ils constituent des représentations schématiques de principe destinées à faciliter la compréhension de l'invention et ne sont pas nécessairement à l'échelle des applications pratiques.

DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :

○ Avantageusement, la centrale comprend comme solution de travail une solution d'eau et de bromure de lithium, dans laquelle l'eau est le fluide frigorigène et le bromure de lithium est l'absorbant.

Cette solution de travail est sélectionnée, car la différence de pression de vapeur entre l'absorbant et le fluide frigorigène est assez importante. De cette manière il n'y a pas de traces de bromure de lithium emmenées avec la vapeur d'eau en sortie du générateur. De plus, ce couple ne présente pas de problèmes de toxicité et garantit de bons rendements. L'absence de toxicité présente un avantage notable pour toutes les applications liées aux bâtiments recevant le public.

○ Avantageusement, la centrale est monobloc. C'est-à-dire que la centrale est contenue dans une enceinte formant un bloc unitaire.

○ Avantageusement, la centrale comprend un dispositif de mise en mouvement de l'air, tel qu'au moins un ventilateur, agencé en partie supérieure du compartiment de circulation d'air de sorte à générer un flux d'air ascendant avantageusement par dépression.

○ Avantageusement, la au moins une batterie froide humide de l'évaporateur comprend une pluralité de tubes avantageusement à ailettes dans lesquels circulent le fluide frigorigène et autour desquels circule le flux d'air entrant, les tubes étant agencés transversalement au flux d'air entrant.

○ Avantageusement, l'évaporateur comprend un distributeur distribuant le fluide frigorigène dans la pluralité de tubes à ailettes et un collecteur collectant le fluide frigorigène issu de la pluralité de tubes à ailettes, le collecteur étant agencé au-dessous des tubes et le distributeur étant agencé en dessus des tubes. L'écoulement gravitaire du fluide frigorigène est amélioré. Cette disposition permet également une vidange complète de l'évaporateur lors de l'arrêt de la centrale.

○ Avantageusement, la centrale comprend une boucle de recirculation du fluide frigorigène dans l'évaporateur. Plus précisément, la boucle de recirculation est configurée pour mettre en connexion fluidique une sortie du fluide frigorigène de l'évaporateur et une entrée du fluide frigorigène dans l'évaporateur. Selon un mode de réalisation, la boucle de circulation est agencée entre le collecteur de l'évaporateur et le distributeur de l'évaporateur. La boucle de recirculation est destinée à récupérer le fluide frigorigène non évaporé en sortie de l'évaporateur, avantageusement au niveau du collecteur, pour le réinjecter en entrée de l'évaporateur, avantageusement au niveau du distributeur. Cette recirculation permet également d'augmenter localement le début de fluide frigorigène pour augmenter le coefficient d'échange et ainsi les performances de la centrale.

○ Avantageusement, la au moins une batterie chaude du condenseur comprend une pluralité de tubes avantageusement à ailettes dans lesquels circulent le fluide frigorigène et autour desquels circule le flux d'air asséché et refroidi, les tubes étant agencés transversalement au flux d'air asséché et refroidi.

◦ Avantageusement, le condenseur comprend un distributeur distribuant le fluide frigorigène dans la pluralité de tubes à ailettes et un collecteur collectant le fluide frigorigène issu de la pluralité de tubes à ailettes, le distributeur étant agencé au-dessus des tubes et le collecteur étant agencé en dessous des tubes.

Pour limiter les pertes de pression dans les échangeurs, la vitesse d'écoulement dans les échangeurs (et donc les coefficients d'échanges) et/ou la longueur parcourue par le fluide (et donc la surface d'échange) sont limitées. Dans le cas d'échange liquide/air, comme spécifiquement pour un évaporateur ou un condenseur de l'invention, le coefficient d'échange limitant se situe côté air, nécessitant de grandes surfaces d'échanges avantageusement obtenus par l'ajout d'ailettes. Le pas d'ailette est limité et reste fortement conditionné par la longueur des tubes mis en oeuvre. À titre d'exemple indicatif, le pas d'ailettes est généralement compris entre 1.5 et 3mm et la longueur des tubes est généralement comprise entre 200 et 2000mm.

Le choix d'un échangeur tube-ailette comme condenseur permet d'atteindre un équilibre entre pertes de pression et puissance thermique.

◦ Avantageusement, l'évaporateur comprend deux batteries froides humides. L'évaporateur est ainsi séparé en deux batteries froides ce qui permet de limiter les pertes de pression. La centrale comprend au moins un échangeur tube-ailette utilisé comme évaporateur et avantageusement positionné dans le compartiment de circulation d'air. Préférentiellement, la centrale comprend au moins deux batteries froides humides comme évaporateur et avantageusement positionnées en parallèle dans le compartiment de circulation d'air. De cette manière des conditions de fonctionnement homogène sur l'air à traiter sont garanties. De plus, cela permet d'augmenter le nombre de tubes et donc de limiter la vitesse de passage, de réduire la longueur spécifique de chaque tube et donc de limiter les pertes de pression tout en conservant une surface d'échange suffisante.

Ce positionnement avantageusement en parallèle des au moins deux batteries froides comme évaporateur couplé à la position du collecteur de sortie en partie inférieure permet également de positionner la liaison vers l'absorbeur avantageusement de manière centrale, préférentiellement en utilisant un diamètre important, sans impacter pour autant l'écoulement du flux d'air dans le compartiment de circulation d'air.

◦ Avantageusement, l'absorbeur comprend une entrée de source froide et une sortie de source froide, la source froide étant de l'eau, avantageusement de l'eau d'une piscine.
◦ Avantageusement, le générateur comprend une entrée de source chaude et une sortie de source chaude, la source chaude étant de l'eau.

◦ Avantageusement, le flux d'air à traiter est l'air intérieur d'un bâtiment. Avantageusement, la centrale comprend un flux d'air entrant destiné à être traité, un flux d'air asséché et refroidi circulant entre l'évaporateur et le condenseur et un flux d'air sortant traité.

◦ Avantageusement, dans le procédé l'étape d'absorption d) dans l'absorbeur comprend un transfert thermique entre la vapeur de fluide frigorigène, la solution de travail et une source froide de sorte évacuer la chaleur de réaction dégagée par l'absorption du fluide frigorigène par la solution de travail et à réchauffer la source froide, la source froide étant de l'eau avantageusement d'une piscine.
◦ Avantageusement, dans le procédé l'étape de vaporisation c) dans le générateur comprend un transfert thermique entre la solution de travail et une source chaude de sorte à vaporiser le fluide frigorigène contenu dans la solution de travail, la source chaude étant de l'eau, avantageusement de l'eau chauffée par énergie solaire, chaleur fatale, chaudière à gaz à condensation à haut rendement.

L'usage de l'article indéfini " un " ou " une " pour un élément ou une étape n'exclut pas, sauf mention contraire, la présence d'une pluralité de tels éléments ou étapes.

Il est précisé que dans le cadre de la présente invention, les termes « sur », « surmonte », « recouvre » ou « sous-jacent » ou leurs équivalents ne signifient pas forcément « au contact de ».

Dans la présente description, l'expression « A fluidiquement raccordée à B» ne signifie pas nécessairement qu'il n'existe pas d'organe entre A et B.

On entend par échange direct ou couplage direct que l'échange d'énergie thermique se fait directement sans circuit ou composant intermédiaire. L'échange direct dans le condenseur l'évaporateur se fait directement entre le fluide frigorigène et le flux d'air. Avantageusement, selon l'invention l'échange entre le fluide frigorigène et le flux d'air se fait par contact indirect c'est-à-dire au travers des batteries de l'évaporateur et du condenseur.

Dans la présente description, les termes assécher et déshumidifier sont considérés comme équivalent et signifient rendre quelque chose de moins humide, c'est-à-dire retirer au moins partiellement l'eau contenue.

La centrale de traitement de l'air fonctionne et comprend les éléments d'un dispositif d'absorption. Un dispositif d'absorption est une pompe à chaleur réversible à « compression » thermique utilisant des couples réfrigérant/sorbant présentant de fortes affinités afin de remplacer la compression de vapeur des machines traditionnelles. Cette solution présente de faibles consommations électriques, l'énergie principale étant issue de la source thermique, permettant de limiter le coût de fonctionnement dans le cas de la valorisation d'une source d'énergie à bas coût tel que le gaz par exemple ou gratuite (tel que l'énergie solaire ou le rejet de chaleur par exemple. De plus, les fluides frigorigènes utilisés dans les dispositifs à absorption ne présentent aucun impact environnemental : ni sur le réchauffement climatique (GWP pour Global warning potential = 0), ni sur la couche d'ozone (ODP pour Ozone depletion potential = 0).

Ce type de dispositif fonctionne grâce à la faculté de certains liquides d'absorber (réaction exothermique) et de désorber (réaction endothermique) une vapeur. Elles utilisent également le fait que la solubilité de cette vapeur dans le liquide dépend de la température et de la pression. Ainsi, ces dispositifs utilisent comme fluide de travail un mélange binaire, dont l'un des composants est plus volatil que l'autre, et constitue le fluide frigorigène.

Un dispositif à absorption est donc composé de 4 échangeurs principaux (générateur, absorbeur, condenseur et évaporateur), d'un échange d'optimisation du cycle (économiseur), d'une pompe à solution et de deux vannes de détente. Ce type de dispositif fonctionne selon trois niveaux de température : un niveau de température basse correspondant à la production de froid à l'évaporateur, un niveau de température intermédiaire correspondant à la température de condensation du fluide frigorigène, mais également à celle d'absorption du fluide frigorigène par l'absorbant et un niveau de température élevé correspondant à la température motrice du générateur.

Ce cycle thermodynamique est réalisable en raison de l'écart de pression de vapeur entre l'absorbant et le fluide frigorigène qui est variable en fonction de la température et de la pression. Cette variabilité permet d'avoir un écart de concentration entre la solution pauvre et la solution riche décrites ci-après. L'avantage de ce cycle à absorption est que la compression mécanique est remplacée par une compression thermochimique qui utilise de la chaleur, c'est-à-dire une source d'énergie primaire dégradée. Le seul apport d'énergie primaire nécessaire se situe au niveau de la pompe à solution, mais son travail est environ 96 fois inférieur au travail que le compresseur de vapeur doit fournir pour des conditions de fonctionnement similaires. La performance de ces dispositifs s'exprime de ce fait généralement en négligeant le travail mécanique fourni à la pompe devant les énergies thermiques mises en jeux par un coefficient de performance thermique (COP$_{th}$) correspondant à l'énergie frigorifique produite à l'évaporateur (P$_E$) divisée par l'énergie thermique consommée au générateur (P$_G$):

$$COP_{th} = \frac{P_E}{P_G}$$

Et plus largement dans le cadre d'une valorisation complète du froid produit à l'évaporateur (P$_E$), de la chaleur rejetée au condenseur Pc et à l'absorbeur P$_A$) par un coefficient de performance thermique globale (COP$_{th}$, global) :

$$COP_{th,global} = \frac{P_E + P_A + P_C}{P_G}$$

Selon l'invention, la centrale comprend une solution de travail fluide frigorigène/absorbant comprenant Eau/Bromure de Lithium. Les concentrations du fluide de travail et de l'absorbant dans la solution de travail sont adaptées à la pression et la température du traitement d'air et inférieures à la concentration de cristallisation de la solution.

Le couple H$_2$O/LiBr présente de bonnes propriétés physiques notamment au niveau de la pression de vapeur de l'absorbant qui est assez basse par rapport à celle du fluide frigorigène. De cette manière il n'y a pas de traces de bromure de lithium emmenées avec la vapeur d'eau en sortie du générateur. De plus, ce couple ne présente pas de problèmes de toxicité et garantit de bons coefficients de performance.

Mais le couple H$_2$O/LiBr est limité aux applications de climatisation, car les propriétés physiques de l'eau ne permettent pas son évaporation en dessous de 0°C et les plages de pression de fonctionnement pour ce couple impliquent un fonctionnement à très basse pression du dispositif. Il n'est pas possible avec ce couple de produire du froid négatif. Un autre inconvénient du couple eau/bromure de lithium est sa cristallisation qui est possible si la quantité de bromure de lithium est trop importante par rapport à la quantité d'eau dans la solution. Il y a donc risque de solidification du mélange en fonction des plages de fonctionnements en pression et température.

La solution de travail est dite riche, car la concentration en fluide frigorigène est plus importante que dans la solution de travail dite pauvre.

Selon un mode de réalisation non préféré, une solution de travail utilisant le couple ammoniac /eau (NH$_3$/H$_2$O) peut être utilisée. Ce couple présente quant à lui une température de solidification basse, que ce soit celle de l'ammoniac

6

ou celle du mélange ammoniac/eau. Ce couple est donc utilisable pour des applications de climatisation, mais aussi de réfrigération et il n'y a pas de cristallisation possible sur les plages de fonctionnement en pression et température. Par contre, pour ce couple, l'écart de pression de vapeur entre l'absorbant et le fluide frigorigène est faible. Il y a donc des traces d'eau emmenées avec la vapeur d'ammoniac en sortie du générateur. De plus le couple $NH_3/HO$ est contraignant en raison de sa toxicité pour l'homme et de sa corrosivité sur de nombreux matériaux. Dans la suite de cette description, les connexions fluidiques sont préférentiellement directes c'est-à-dire sans autre élément sauf si cela est précisé.

La centrale selon l'invention comprend :

- Un générateur 105 configuré pour vaporiser le fluide frigorigène. Le générateur est connecté fluidiquement à l'absorbeur 101 et au condenseur 106. Le générateur 105 comprend une connexion fluidique 3 avec l'absorbeur 101 et plus précisément avec l'économiseur 103 décrit ci-après permettant l'entrée de la solution de travail dite riche dans le générateur 105. Le générateur 105 comprend une connexion fluidique 4 avec l'absorbeur 101 et plus précisément avec l'économiseur 103 décrit ci-après permettant la sortie de la solution de travail dite pauvre hors du générateur 105. L'économiseur 103 étant lui-même avantageusement connecté fluidiquement 5 à un détendeur 104 permettant de détendre la pression de la solution de travail dite pauvre avant qu'elle soit transmise à l'absorbeur 101 par la connexion fluidique 6. Le générateur 105 comprend une connexion fluidique 7 avec le condenseur 106 permettant la sortie de la vapeur de fluide frigorigène hors du générateur 105. Le générateur comprend également une entrée 11 et une sortie 12 de source chaude permettant l'apport de chaleur nécessaire à la vaporisation du fluide frigorigène.

La centrale selon l'invention comprend :

- Un condenseur 106 configuré pour condenser la vapeur de fluide frigorigène. Le condenseur est connecté fluidiquement au générateur 105 et à l'évaporateur 108. Le condenseur 106 comprend une connexion fluidique 7 issue du générateur 105 permettant l'entrée de la vapeur de fluide frigorigène dans le condenseur 105. Le condenseur 106 comprend une connexion fluidique 8 avec l'évaporateur, plus précisément avec un détendeur 107, permettant la sortie du fluide frigorigène à l'état liquide. Le condenseur 106 comprend également une entrée 17 de flux d'air asséché et refroidi et une sortie 18 de flux d'air sortant. Le condenseur 106 est avantageusement au moins une batterie chaude. Le condenseur 106 comprend un ensemble de tubes préférentiellement munis d'ailettes destinées à augmenter la surface d'échange des tubes dans lesquels circule le fluide frigorigène entre un distributeur et un collecteur. Un flux d'air asséché et refroidi destiné à être réchauffé circule autour des tubes. Le changement de phase du fluide frigorigène de l'état vapeur à l'état liquide s'accompagne d'une libération de chaleur qui est transmise au flux d'air circulant autour des tubes.
- Avantageusement, la centrale comprend un détendeur 107 agencé entre le condenseur 106 et l'évaporateur 108. Le détendeur 107 est configuré pour détendre le fluide frigorigène à l'état liquide issu du condenseur 106. Le détendeur 107 amène le fluide frigorigène à sa pression d'évaporation.

La centrale selon l'invention comprend :

- Un évaporateur 108 configuré pour vaporiser le fluide frigorigène. L'évaporateur 108 est connecté fluidiquement au condenseur 106 et à l'absorbeur 101. L'évaporateur 108 comprend une connexion fluidique 9 issue du condenseur 106, plus précisément avec un détendeur 107, permettant l'entrée du fluide frigorigène à l'état liquide dans l'évaporateur 108. L'évaporateur 108 comprend une connexion fluidique 10 avec l'absorbeur 101, permettant la sortie de la vapeur de fluide frigorigène. Le condenseur 106 comprend également une entrée 15 de flux d'air entrant et une sortie 16 de flux d'air asséché et refroidi. L'évaporateur 108 est avantageusement au moins une batterie froide humide. L'évaporateur 108 comprend un ensemble de tubes préférentiellement munis d'ailettes destinées à augmenter la surface d'échange des tubes dans lesquels circule le fluide frigorigène entre un distributeur et un collecteur. Un flux d'air à assécher circule autour des tubes. Le changement de phase du fluide frigorigène de l'état liquide à de l'état vapeur s'accompagne d'une transmission de chaleur du flux d'air circulant autour des tubes.

La centrale selon l'invention comprend :

- Un absorbeur 101 configuré pour condenser la vapeur de fluide frigorigène issue de l'évaporateur 108. L'absorbeur 101 est connecté fluidiquement à l'évaporateur 108 et au générateur 105. L'absorbeur 101 comprend une connexion fluidique 10 issue de l'évaporateur 108 permettant l'entrée du fluide frigorigène à l'état de vapeur dans l'absorbeur 101. L'absorbeur 101 comprend une connexion fluidique 1 avec le générateur 105, plus précisément avec une pompe 102 destinée à mettre en circulation la solution de travail dans le circuit de circulation fluidique, plus précisément une solution de travail dite riche sort de l'absorbeur 101 en direction du générateur 105 par la connexion fluidique 1. Avantageusement, la pompe 102 est connectée fluidiquement à un économiseur 103 au travers duquel la solution de travail dite riche est réchauffée avant d'être transmise au générateur 105. Avantageusement, l'économiseur 103 est un échangeur transmettant de la chaleur de la solution dite pauvre issue du générateur 105 vers la solution dite riche issue de l'absorbeur 101. L'absorbeur 101 comprend une connexion fluidique 6 avec le générateur 105, plus précisément avec un détendeur 104. La connexion fluidique 6 permet l'entrée de la solution de travail dite pauvre issue du générateur 105 dans l'absorbeur 101.

D'un point de vue de l'air à traiter, le flux d'air à traiter c'est-à-dire avantageusement à déshumidifier et préférentiellement à maintenir autour d'une température constante, est issu d'un bâtiment. Par exemple, pour le traitement de l'air d'une piscine couverte, le taux d'humidité du flux d'air à traiter est compris entre 60 et 85% et sa température est par exemple comprise entre 27 et 31°C. Son humidité absolue est ainsi comprise entre 11 et 23 g/kg. Le flux d'air à traiter pénètre dans l'évaporateur 108 par une entrée 15 de flux d'air entrant. Le flux d'air circule autour des tubes contenant le fluide frigorigène. Le flux d'air cède sa chaleur au fluide frigorigène qui se vaporise dans les tubes. Le contact du flux d'air entrant avec les tubes contenant le fluide frigorigène entraine la condensation de l'eau contenue dans le flux d'air permettant ainsi son assèchement. Ce phénomène s'accompagne également d'une baisse de la température du flux d'air. Le flux d'air ressort de l'évaporateur 108 par une sortie 16 de flux d'air asséché et refroidi. À titre d'exemple, le flux d'air asséché ou déshumidifié et refroidi possède un taux d'humidité relative de 100%% et une température par exemple comprise entre 12 et 23°C soit une humidité absolue comprise entre 8 et 18 g/kg. Le flux d'air asséché et refroidi est transmis avantageusement directement au condenseur 106 pour le réchauffer. Le flux d'air asséché et refroidi pénètre dans le condenseur 106 par une entrée 17 de flux d'air, puis circule dans le condenseur 108 autour des tubes contenant le fluide frigorigène. Le fluide frigorigène à l'état de vapeur cède sa chaleur au flux d'air circulant autour des tubes. Ce transfert de chaleur conduit au changement de phase du fluide frigorigène de l'état de vapeur à l'état liquide. Le flux d'air sortant du condenseur 108 par la sortie 18 présente à titre d'exemple une température comprise entre 31°C et 45°C. Préférentiellement, le taux d'humidité absolue reste inchangé, c'est-à-dire équivalent au taux d'humidité du flux d'air, assèche et refroidi issu de l'évaporateur 108. C'est-à-dire que le poids d'eau est constant, mais pas l'hygrométrie. Le taux d'humidité relative est ainsi d'environ 30%.

L'invention permet donc un traitement optimal d'un flux d'air en le déshumidifiant et en le réchauffant.

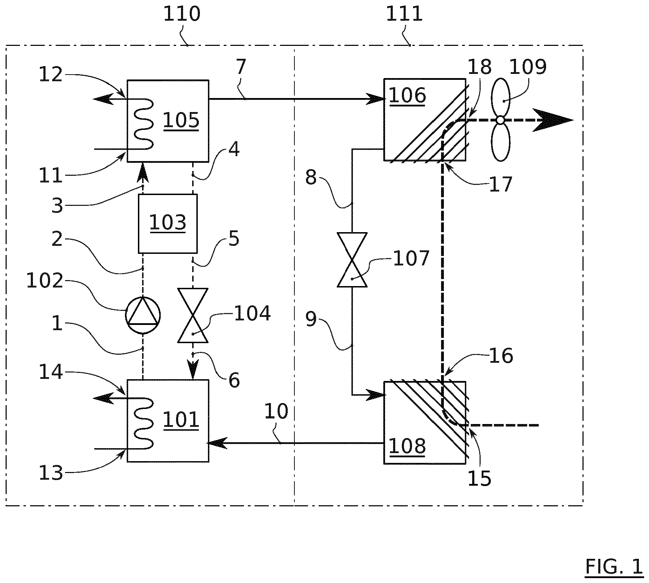

En référence à la figure 1, le principe de fonctionnement d'un cycle thermodynamique d'un dispositif à absorption, avantageusement simple effet et simple étage d'une centrale selon l'invention mettant un oeuvre est décrit ci-après :

- Dans l'absorbeur 101 (10 à 1) :
  La vapeur de fluide frigorigène issue de l'évaporateur 108 est absorbée par diffusion massique dans la solution de travail liquide pauvre (issue de 6) au sein de l'absorbeur 101. Il y a donc changement de phase vapeur - liquide par condensation de la vapeur de fluide frigorigène. Pendant cette étape d'absorption qui est exothermique, un fluide caloporteur circule dans l'absorbeur. Le fluide caloporteur est une source froide pénétrant dans l'absorbeur par une entrée 13 et ressortant par une sortie 14. Une quantité de chaleur à moyenne température est cédée par le fluide frigorigène au fluide caloporteur circulant dans l'absorbeur 101. Le fluide caloporteur permet donc d'évacuer la chaleur de réaction dégagée par l'absorption. Le fluide caloporteur est avantageusement de l'eau et selon un mode de réalisation préféré, l'eau est destinée à alimenter un bassin tel qu'une piscine. Le passage de l'eau au sein de l'absorbeur 101 permet son réchauffage, c'est-à-dire que l'eau pénètre dans l'absorbeur par l'entrée 13 à une première température inférieure à une deuxième température de l'eau sortant de l'absorbeur par la sortie 14.
- Entre l'absorbeur et le générateur de 1 à 3 :
  La solution de travail liquide est fortement concentrée en fluide frigorigène, elle est appelée solution riche. Elle est amenée à la pression de condensation du fluide frigorigène à l'aide d'une pompe 102 (1 à 2) qui permet également une mise en circulation de la solution de travail dans le circuit de circulation, puis préchauffée dans un échangeur intermédiaire appelé économiseur 103 (2 à 3) pour être injectée dans le générateur 105;
- Dans le générateur de 3 à 4 et 7 :
  La solution riche est chauffée dans le générateur 105, avantageusement à haute température. Le phénomène de désorption endothermique a lieu et la solution riche libère de la vapeur de fluide frigorigène qui est transmise (7) vers le condenseur 106. La solution de travail liquide restante dans le générateur 105 est maintenant peu concentrée en fluide frigorigène, elle est appelée solution pauvre qui est renvoyée (4) vers l'absorbeur 101. Elle est alors pré-refroidie dans l'économiseur 103 (4 à 5) et détendue à l'aide d'un détendeur 104 (5 à 6) tel qu'une vanne pour retrouver la pression d'évaporation du fluide frigorigène. Elle peut maintenant être réinjectée dans l'absorbeur 101 et absorber de nouveau des vapeurs de fluide frigorigène (issue de 10) ;
- Dans le condenseur 106 (7 à 9) :
  La vapeur de fluide frigorigène est condensée dans le condenseur 106 (7 à 8). Il y a donc changement de phase vapeur vers liquide par condensation de la vapeur de fluide frigorigène. Ce changement de phase s'accompagne d'un transfert de chaleur à moyenne température avantageusement vers le flux d'air asséché et refroidi circulant dans le condenseur 105. Puis le fluide frigorigène liquide est détendu à sa pression d'évaporation au niveau d'un détendeur 107 tel qu'une vanne. Le flux d'air

- Dans l'évaporateur 108 (9 à 10) :
Le fluide frigorigène à l'état liquide se vaporise dans l'évaporateur 108. Il y a alors production de froid entrainant avantageusement la déshumidification du flux d'air circulant dans l'évaporateur 108. Le flux d'air est asséché et refroidi. Le fluide frigorigène à l'état vapeur s'évacue vers l'absorbeur 101.

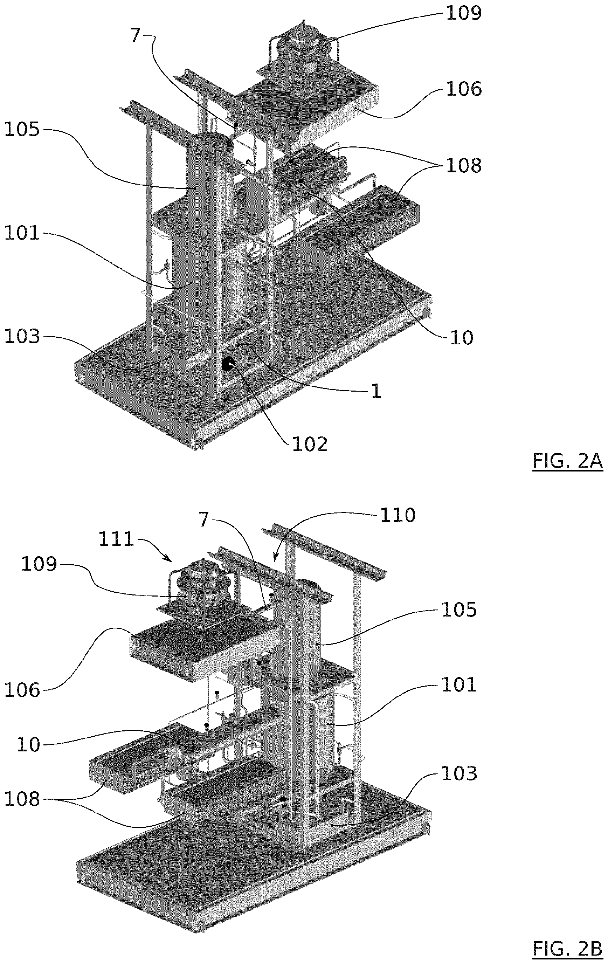

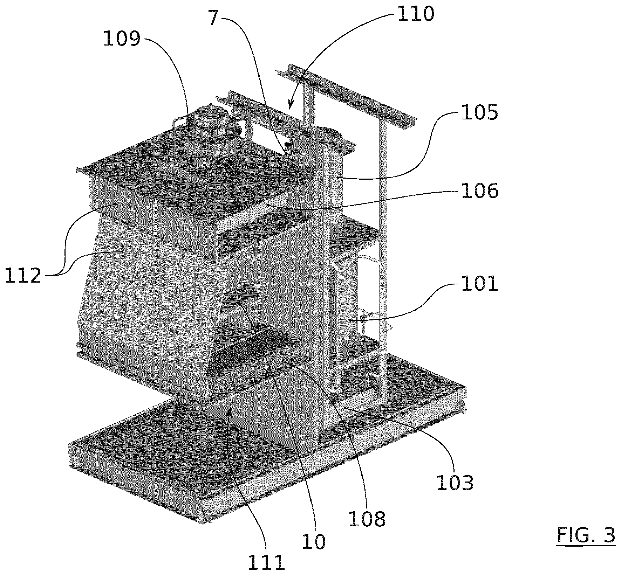

Un mode de réalisation préféré de la centrale est décrit en référence à aux figures 2A, 2B, 3 correspondant à une vue 3D de la figure 1

Dans la suite de la description, en dessous et au-dessus s'entendent suivant une orientation verticale.

Sur les figures 2A et 2B, la centrale comprend un compartiment technique 110, s'étendant avantageusement verticalement, recevant le générateur 105 qui est disposé au-dessus de l'absorbeur 101. L'économiseur 103, la pompe 102 et le détendeur 104 sont avantageusement disposés en dessous de l'absorbeur 101. Avantageusement, le compartiment technique 110 comprend également le détendeur 107 disposé sur la connexion fluidique 8-9 reliant le condenseur 106 à l'évaporateur 108. Avantageusement, en parallèle du compartiment technique, la centrale comprend un compartiment de circulation d'air 111, également dénommée veine d'air s'étendant avantageusement verticalement, et dans lequel le flux d'air présente un mouvement ascendant c'est-à-dire du bas vers le haut. Le flux d'air est avantageusement mis en mouvement par un dispositif de mise en mouvement tel qu'un ventilateur 109 agencé en partie supérieure du compartiment de circulation d'air 111. Ce compartiment de circulation d'air 111 reçoit l'évaporateur 108 agencé en dessous du condenseur 106. Préférentiellement, l'évaporateur 108 comprend deux batteries froides humides disposées transversalement au flux d'air circulant dans le compartiment de circulation d'air 111. Les deux batteries froides humides sont disposées en parallèle l'une de l'autre, le collecteur étant disposé en partie inférieure et le distributeur étant disposé en partie supérieure des batteries froides humides, permettant avantageusement une liaison centrale, courte et de diamètre important vers l'absorbeur 101. Préférentiellement, le condenseur 106 comprend une batterie chaude présentant une liaison directe entre le générateur 105 et le distributeur positionné en partie haute de la batterie, et le collecteur positionné en partie basse, soit directement en direction de l'évaporateur 108. La liaison centrale comprend avantageusement un point bas configuré pour permettre la séparation liquide / vapeur par gravité du fluide frigorigène. Le fluide frigorigène à l'état liquide peut avantageusement être réinjecté en entrée de l'évaporateur 108 par la boucle de recirculation comprenant avantageusement une pompe de recirculation.

L'absorbeur 101 est disposé au même niveau de hauteur que l'évaporateur 108 tandis que le générateur 105 est disposé au même niveau de hauteur que le condenseur 106 de sorte à permettre des connexions fluidiques les plus courtes possible et les plus directes possible lorsqu'elle concerne le fluide frigorigène notamment à l'état de vapeur. On entend par même niveau de hauteur que les composants sont disposés sur un même plan horizontal.

La centrale peut comprendre des déflecteurs 112 permettant une bonne alimentation des batteries en flux d'air.

Exemple :

Une comparaison des performances estimées de l'invention selon la figure 1 et d'un système simplifié de l'état de la technique possédant à la place des batteries de l'évaporateur 108 et des batteries du condenseur 106 des circuits intermédiaires d'eau glacée permettant de faire l'intermédiaire entre le condenseur 106, l'évaporateur 108 et des batteries échangeant avec l'air.

Dans lesquelles :

P est la puissance en KW du composant

$T_8$ et $T_{10}$ les températures du fluide caloporteur respectivement au point 8 en sortie du condenseur et 10 en sortie de l'évaporateur.

Pinch le pincement en température entre les deux fluides de l'échangeur considéré

$T_{E\,out}$ et $T_{C\,out}$ les températures du flux d'air respectivement en sortie de l'évaporateur et en sortie du condenseur

$HR_{E\,out}$ et $HR_{C\,out}$ les taux d'humidités relatives du flux d'air respectivement en sortie de l'évaporateur et en sortie du condenseur

$W_{E\,out}$ et $W_{C\,out}$ les taux d'humidité absolue du flux d'air respectivement en sortie de l'évaporateur et en sortie du condenseur.

| Composants | Grandeurs | Unités | Architecture indirecte | Invention | Ecart |
|---|---|---|---|---|---|
| Evaporateur | $P_E$ | [kW] | 1,000 | 1,635 | 64% |
| | $T_{10}$ | [°C] | 5,7 | 11,1 | 95% |
| | $Pinch_E$ | [K] | 13,7 | 5,9 | -57% |
| | $T_{E, out}$ | [°C] | 19,4 | 16,9 | -13% |
| | $HR_{E, out}$ | [%] | 100 | 100 | 0% |
| | $W_{E, out}$ | [g/kg] | 14,1 | 12,1 | -14% |
| Condenseur | $P_C$ | [kW] | 1,056 | 1,727 | 62% |
| | $T_8$ | [°C] | 44,3 | 40,6 | -8% |
| | $Pinch_C$ | [K] | 13,4 | 3,2 | -76% |
| | $T_{C, out}$ | [°C] | 32 | 37,4 | 17% |
| | $HR_{C, out}$ | [%] | 47 | 30 | -36% |

| | | | | | |
|---|---|---|---|---|---|
| | $W_{C, out}$ | [g/k] | 14,1 | 12,1 | -14% |
| Générateur | $P_G$ | [kW] | 1,689 | 2,370 | 40% |
| Absorbeur | $P_A$ | [kW] | 1,633 | 2,279 | 40% |
| Performances thermiques | $COP_{th}$ | [-] | 0,592 | 0,690 | 17% |
| | $COP_{th, global}$ | [-] | 2,18 | 2,38 | 9% |

Il est notable que l'invention permet des gains en puissance de l'ordre de 60% à l'évaporateur et au condenseur (ce qui permet donc de conditionner 60% de débit d'air de plus) et d'environ 40% à l'absorbeur grâce au gain sur les pincements d'échanges. En conséquence, la consommation de chaleur au générateur augmente de 40%. Le rendement thermique global se trouve ainsi amélioré d'environ 10%.

<u>REFERENCES</u>

1. Connexion fluidique entre l'absorbeur et la pompe à solution
2. Connexion fluidique entre la pompe à solution et l'économiseur
3. Connexion fluidique entre l'économiseur et le générateur
4. Connexion fluidique entre le générateur et l'économiseur
5. Connexion fluidique entre l'économiseur et le détendeur solution
6. Connexion fluidique entre le détendeur solution et l'absorbeur
7. Connexion fluidique entre le générateur et le condenseur
8. Connexion fluidique entre le condenseur et le détendeur réfrigérant
9. Connexion fluidique entre le détendeur réfrigérant et l'évaporateur
10. Connexion fluidique entre l'évaporateur et l'absorbeur
11. Entrée source chaude
12. Sortie source chaude
13. Entrée source froide
14. Sortie source froide
15. Entrée flux d'air entrant
16. Sortie flux d'air asséché et refroidi
17. Entrée flux d'air asséché et refroidi
18. Sortie flux d'air sortant

101. Absorbeur
102. Pompe à solution
103. Economiseur
104. Détendeur solution
105. Générateur
106. Condenseur
107. Détendeur réfrigérant
108. Evaporateur
109. Ventilateur
110. Compartiment technique
111. Compartiment de circulation d'air
112. Déflecteurs

## Revendications

1. Centrale de traitement de l'air destinée à assécher un flux d'air entrant dans la centrale comprenant un absorbeur (101), un générateur (105), un condenseur (106), un évaporateur (108) et un circuit de circulation fluidique apte à recevoir une solution de travail comprenant un fluide frigorigène et un absorbant, le circuit fluidique reliant le générateur (105) au condenseur (106), le condenseur (106) à l'évaporateur (108), l'évaporateur (108) à l'absorbeur (101) et l'absorbeur (101) au générateur (105) et dans laquelle

   - le générateur (105) est configuré pour vaporiser le fluide frigorigène de la solution de travail,
   - le condenseur (106) est configuré pour condenser le fluide frigorigène à l'état de vapeur issu du générateur (105),
   - l'évaporateur (108) est configuré pour vaporiser le fluide frigorigène issu du condenseur (106),
   - l'absorbeur (101) est configuré pour condenser le fluide frigorigène à l'état de vapeur issu de l'évaporateur (108) pour permettre son absorption par la solution de travail,

   où l'évaporateur (108) comprend au moins une batterie froide humide destinée à assécher et refroidir un flux d'air entrant par échange direct avec le fluide frigorigène et le condenseur (106) comprend une batterie chaude destinée à réchauffer un flux d'air asséché et refroidi issu de l'évaporateur (108) par échange direct avec le fluide frigorigène , **caractérisé en ce que** la centrale de traitement comprend un compartiment technique (110) dans lequel est agencé le générateur (105) et l'absorbeur (101) et un compartiment de circulation d'air (111) configuré pour recevoir un flux d'air ascendant et dans lequel sont agencés l'évaporateur (108) et le condenseur (106), le condenseur (106) étant agencé au-dessus de l'évaporateur (108), le condenseur (106) étant agencé à un même niveau de hauteur que le générateur (105), et l'évaporateur (108) étant agencé à un même niveau de hauteur que l'absorbeur (101).

2. Centrale selon la revendication précédente dans laquelle le générateur (105) et l'absorbeur (101) sont disposés l'un au-dessus de l'autre, le générateur (105) étant disposé au-dessus de l'absorbeur (101).

3. Centrale selon l'une quelconque des revendications précédentes comprenant un dispositif de mise en mouvement de l'air (109) agencé en partie supérieure du compartiment de circulation d'air (111) de sorte à générer un flux d'air ascendant.

4. Centrale selon l'une quelconque des revendications précédentes dans laquelle l'absorbeur (106) comprend une entrée (13) de source froide et une sortie (14) de source froide, la source froide étant de l'eau, avantageusement de l'eau d'une piscine et/ou le générateur (105) comprend une entrée (11) de source chaude et une sortie (12) de source chaude, la source chaude étant de l'eau.

5. Centrale selon l'une quelconque des revendications précédentes dans laquelle le flux d'air à traiter est l'air intérieur d'un bâtiment.

6. Procédé de traitement de l'air par une centrale selon l'une quelconque des revendications précédentes comprenant les étapes successives suivantes

   a. de chauffage de la solution de travail dans le générateur (105) de sorte à vaporiser le fluide frigorigène et à conserver l'absorbant à l'état liquide,

b. de condensation de la vapeur du fluide frigorigène issu du générateur (105) dans le condenseur par transfert de l'énergie thermique de la vapeur du fluide frigorigène à un flux d'air asséché et refroidi issu de l'évaporateur (108) de sorte à le réchauffer,

c. de vaporisation du fluide frigorigène issu du condenseur (106) dans l'évaporateur par transfert de l'énergie thermique à un flux d'air entrant de sorte à assécher et à refroidir ledit flux d'air entrant,

d. d'absorption de la vapeur de fluide frigorigène issue de l'évaporateur (108) dans l'absorbeur (101)

et dans lequel le flux d'air circule suivant un mouvement ascendant dans un compartiment de circulation d'air (111) dans lequel sont agencés l'évaporateur (108) et le condenseur (106), le générateur (105) et l'absorbeur (101) étant agencés dans un compartiment technique (110), le condenseur (106) étant agencé à un même niveau de hauteur que le générateur (105), et l'évaporateur (108) étant agencé à un même niveau de hauteur que l'absorbeur (101).

7. Procédé selon la revendication précédente dans lequel l'étape d'absorption d) dans l'absorbeur (101) comprend un transfert thermique entre la vapeur de fluide frigorigène, la solution de travail et une source froide de sorte à évacuer la chaleur de réaction dégagée par l'absorption du fluide frigorigène et à réchauffer la source froide, la source froide étant de l'eau avantageusement d'une piscine.

8. Procédé selon la revendication précédente dans lequel l'étape de vaporisation c) dans le générateur (105) comprend un transfert thermique entre la solution de travail et une source chaude de sorte à vaporiser le fluide frigorigène contenu dans la solution de travail, la source chaude étant de l'eau, avantageusement de l'eau chauffée par énergie solaire, chaleur fatale, chaudière à gaz à condensation à haut rendement.

9. Utilisation d'une centrale de traitement de l'air selon l'une quelconque des revendications 1 à 5 pour assécher l'air intérieur d'une piscine couverte.

10. Utilisation selon la revendication précédente pour réchauffer l'eau d'une piscine.

## Patentansprüche

1. Luftaufbereitungssystem, das dazu bestimmt ist, einen Luftstrom, der in das System eintritt, zu trocknen, das einen Absorber (101), einen Generator (105), einen Kondensator (106), einen Verdampfer (108) und einen Fluidzirkulationskreislauf umfasst, der dazu geeignet ist, eine Arbeitslösung aufzunehmen, die ein Kältemittel und ein Absorptionsmittel umfasst, wobei der Fluidkreislauf den Generator (105) mit dem Kondensator (106), den Kondensator (106) mit dem Verdampfer (108), den Verdampfer (108) mit dem Absorber (101) und den Absorber (101) mit dem Generator (105) verbindet, und wobei

- der Generator (105) dazu konfiguriert ist, das Kältemittel der Arbeitslösung zu verdampfen,
- der Kondensator (106) dazu konfiguriert ist, das Kältemittel in dem Dampfzustand, das aus dem Generator (105) austritt, zu kondensieren,
- der Verdampfer (108) dazu konfiguriert ist, das Kältemittel, das aus dem Kondensator (106) austritt, zu verdampfen,
- der Absorber (101) dazu konfiguriert ist, das Kältemittel in dem Dampfzustand, das aus dem Verdampfer (108) austritt, zu kondensieren, um seine Absorption durch die Arbeitslösung zu erlauben, wobei der Verdampfer (108) mindestens ein Aggregat für feuchte Kälte umfasst, das dazu bestimmt ist, den eintretenden Luftstrom durch direkten Austausch mit dem Kältemittel zu trocken und zu kühlen, und der Kondensator (106) ein Wärmeaggregat umfasst, das dazu bestimmt ist, einen getrockneten und gekühlten Strom, der aus dem Verdampfer (108) austritt, durch direkten Austausch mit dem Kältemittel zu erwärmen,

dadurch gekennzeichnet, dass das Aufbereitungssystem einen technischen Raum (110) umfasst, in dem der Generator (105) und der Absorber (101) eingerichtet sind, und einen Luftzirkulationsraum (111), der dazu konfiguriert ist, einen aufsteigenden Luftstrom aufzunehmen, und in dem der Verdampfer (108) und der Kondensator (106) eingerichtet sind, wobei der Kondensator (106) oberhalb des Verdampfers (108) eingerichtet ist, der Kondensator (106) auf derselben Höhenebene wie der Generator (105) eingerichtet ist, und der Verdampfer (108) auf derselben Höhenebene wie der Absorber (101) eingerichtet ist.

2. System nach dem vorstehenden Anspruch, wobei der Generator (105) und der Absorber (101) einer über dem anderen angeordnet sind, wobei der Generator (105) oberhalb des Absorbers (101) angeordnet ist.

**3.** System nach einem der vorstehenden Ansprüche, das eine Vorrichtung zum Inbewegungsetzen der Luft (109) umfasst, die in dem oberen Teil des Luftzirkulationsraums (111) derart eingerichtet ist, dass ein aufsteigender Luftstrom erzeugt wird.

**4.** System nach einem der vorstehenden Ansprüche, wobei
der Absorber (106) einen Kältequelleneingang (13) und einen Kältequellenausgang (14) umfasst, wobei die Kältequelle Wasser ist, vorteilhafterweise Wasser eines Schwimmbeckens ist, und/oder der Generator (105) einen Wärmequelleneingang (11) und einen Wärmequellenausgang (12) umfasst, wobei die Wärmequelle Wasser ist.

**5.** System nach einem der vorstehenden Ansprüche, wobei der zu behandelnde Luftstrom Innenluft eines Gebäudes ist.

**6.** Behandlungsverfahren der Luft durch ein System nach einem der vorstehenden Ansprüche, das die folgenden aufeinanderfolgenden Schritte umfasst

   a. Erwärmen der Arbeitslösung in dem Generator (105) derart, dass das Kältemittel verdampft wird und das Absorptionsmittel in dem flüssigen Zustand behalten wird,
   b. Kondensation des Dampfs des Kältemittels, das aus dem Generator (105) austritt, in den Kondensator durch Wärmeenergietransfer des Dampfs des Kältemittels zu einem getrockneten und gekühlten Luftstrom, der aus dem Verdampfer (108) austritt, derart, dass er erwärmt wird,
   c. Verdampfen des Kältemittels, das aus dem Kondensator (106) austritt, in dem Verdampfer durch Transfer der Wärmeenergie an einen eintretenden Luftstrom derart, dass der eintretende Luftstrom getrocknet und gekühlt wird,
   d. Absorption des Dampfs des Kältemittels, das aus dem Verdampfer (108) austritt, in dem Absorber (101) und wobei der Luftstrom gemäß einer aufsteigenden Bewegung in einem Luftzirkulationsraum (111) zirkuliert, in dem der Verdampfer (108) und der Kondensator (106) eingerichtet sind, wobei der Generator (105) und der Absorber (101) in einem technischen Raum (110) eingerichtet sind, der Kondensator (106) an derselben Höhenebene wie der Generator (105) eingerichtet ist, und der Verdampfer (108) in derselben Höhenebene wie der Absorber (101) eingerichtet ist.

**7.** Verfahren nach dem vorstehenden Anspruch, wobei der Absorptionsschritt d) in dem Absorber (101) einen Wärmetransfer zwischen dem Kältemitteldampf, der Arbeitslösung und einer Kältequelle derart umfasst, dass die Reaktionswärme, die durch die Absorption des Kältemittels freigesetzt wird, abgeleitet und die Kältequelle erwärmt wird, wobei die Kältewelle vorteilhafterweise das Wasser eines Schwimmbeckens ist.

**8.** Verfahren nach dem vorstehenden Anspruch, wobei der Verdampfungsschritt c) in dem Generator (105) einen Wärmetransfer zwischen der Arbeitslösung und einer Wärmequelle derart umfasst, dass das Kältemittel, das in der Arbeitslösung enthalten ist, verdampft wird, wobei die Wärmequelle Wasser ist, vorteilhafterweise durch Sonnenenergie, Abwärme, hocheffizienten Gaskondensationskessel erwärmtes Wasser ist.

**9.** Verwendung eines Luftaufbereitungssystems nach einem der Ansprüche 1 bis 5 zum Trocknen der Innenluft eines Hallenbades.

**10.** Verwendung nach dem vorstehenden Anspruch zum Erwärmen des Wassers eines Schwimmbeckens.

**Claims**

**1.** Air treatment unit intended to dry an airflow entering into the unit comprising an absorber (101), a generator (105), a condenser (106), an evaporator (108) and a fluid circulation circuit capable of receiving a working solution comprising a refrigerant fluid and an absorbent, the fluid circuit connecting the generator (105) to the condenser (106), the condenser (106) to the evaporator (108), the evaporator (108) to the absorber (101) and the absorber (101) to the generator (105), and wherein

   - the generator (105) is configured to vaporise the refrigerant fluid of the working solution,
   - the condenser (106) is configured to condense the refrigerant fluid to the vapour state coming from the generator (105),
   - the evaporator (108) is configured to vaporise the refrigerant fluid coming from the condenser (106),
   - the absorber (101) is configured to condense the refrigerant fluid to the vapour state coming from the evaporator (108) to enable its absorption by the working solution,

where the evaporator (108) comprises at least one humid cold battery intended to dry and cool an airflow entering through the direct exchange with the refrigerant fluid and the condenser (106) comprises a hot battery intended to heat a dried and cooled airflow coming from the evaporator (108) by direct exchange with the refrigerant fluid, **characterised in that** the treatment unit comprises a technical compartment (110), wherein the generator (105) and the absorber (101) and an air circulation compartment (111) are arranged, configured to receive an ascending airflow, and wherein the evaporator (108) and the condenser (106) are arranged, the condenser (106) being arranged above the evaporator (108), the condenser (106) being arranged at a same height level as the generator (105), and the evaporator (108) being arranged at a same height level as the absorber (101).

2. Unit according to the preceding claim, wherein the generator (105) and the absorber (101) are disposed on top of one another, the generator (105) being disposed above the absorber (101).

3. Unit according to any one of the preceding claims, comprising a device for moving the air (109) arranged in the upper part of the air circulation compartment (111), so as to generate an ascending air flow.

4. Unit according to any one of the preceding claims, wherein the absorber (106) comprises a cold source inlet (13) and a cold source outlet (14), the cold source being water, advantageously water of a swimming pool and/or the generator (105) comprises a hot source inlet (11) and a hot source outlet (12), the hot source being water.

5. Unit according to any one of the preceding claims, wherein the airflow to be treated is the air inside a building.

6. Method for treating air by a unit according to any one of the preceding claims comprising the following successive steps

   a. heating the working solution in the generator (105) so as to vaporise the refrigerant fluid and to preserve the absorbent in the liquid state,
   b. condensing the vapour of the refrigerant fluid coming from the generator (105) in the condenser by transfer of thermal energy from the vapour of the refrigerant fluid to a dried and cooled airflow coming from the evaporator (108) so as to reheat it,
   c. vaporising the refrigerant fluid coming from the condenser (106) in the evaporator by transfer of thermal energy to an incoming airflow so as to dry and to cool said incoming airflow,
   d. absorbing the refrigerant fluid vapour coming from the evaporator (108) in the absorber(101)

   and wherein the airflow circulates in an ascending movement in an air circulation compartment (111), wherein the evaporator (108) and the condenser (106) are arranged, the generator (105) and the absorber (101) being arranged in a technical compartment (110), the condenser (106) being arranged at one same height level as the generator (105), and the evaporator (108) being arranged at one same height level as the absorber (101).

7. Method according to the preceding claim, wherein the absorption step d) in the absorber (101) comprises a heat transfer between the refrigerant fluid vapour, the working solution and a cold source, so as to discharge the reaction heat released by the absorption of the refrigerant fluid and to reheat the cold source, the cold source being water, advantageously of a swimming pool.

8. Method according to the preceding claim, wherein the vaporisation step c) in the generator (105) comprises a heat transfer between the working solution and a hot source so as to vaporise the refrigerant fluid contained in the working solution, the hot source being water, advantageously water heated by solar energy, waste heat, high efficiency condensation gas boiler.

9. Use of an air treatment unit according to any one of claims 1 to 5 to dry the air inside an indoor swimming pool.

10. Use according to the preceding claim to reheat the water of a swimming pool.

FIG. 1

FIG. 2A

FIG. 2B

FIG. 3

**RÉFÉRENCES CITÉES DANS LA DESCRIPTION**

**Documents brevets cités dans la description**

- CN 106091187

- FR 2341342 A1